# EUROPÄISCHE PATENTSCHRIFT

(11) **EP 1 564 406 B1**
(45) Veröffentlichungstag und Bekanntmachung des Hinweises auf die Patenterteilung: **22.06.2016**
(21) Anmeldenummer: 05002470.2
(22) Anmeldetag: 05.02.2005
(51) Int. Cl.: F03D 80/00, F16C 23/08

(54) **Dämpfungsfähiges Stehlager für Windkraftanlagen**
Wind turbine rotor bearing with damping capability
Palier amortissant pour rotor d'éolienne

(30) Priorität: 11.02.2004 EP 04002989
(43) Veröffentlichungstag der Anmeldung: 17.08.2005
(73) Patentinhaber: FM Energie GmbH & Co. KG, 64646 Heppenheim (DE)
(72) Erfinder: Mitsch, Franz, 64646 Heppenheim (DE)
(74) Vertreter: Benz, Jürgen

(56) Entgegenhaltungen:
- EP-A2- 1 065 374
- EP-A2- 1 197 677
- US-A- 2 282 589

## Beschreibung

Die Erfindung betrifft eine neuartige Lagerung von Rotoren, bzw. Rotorwellen von Windkraftanlagen (Stehlager), die im wesentlichen aus einem der erfindungsgemäßen Verwendung entsprechend geometrisch gestalteten Wälzlager besteht, welches mit einem erfindungsgemäß gestalteten elastomeren Dämpfungsbauteil ausgestattet bzw. mit diesem baulich integriert ist, so dass die Rotorlagerung in der Lage ist, besonders wirkungsvoll während des Betriebes erzeugte unerwünschte in x-, y- und z-Richtung gerichtete Schwingungskräfte (Zug-, Druck-, Quer - und Scherkräfte), insbesondere Körperschallereignisse, zu dämpfen bzw. zu entkoppeln. Das Stehlager gemäß der Erfindung ist nicht nur für den Einsatz in Windkraftanlagen geeignet, sondern auch für andere Maschinen und Anlagen, welche ähnliche Schwingungs- und Krafteinwirkungsprofile aufweisen. Eine bekannte Lageranordnung in einer Windkraftanlage ist aus EP-A2-1 197 677 bekannt. Antriebswellen sind sehr häufig Schwingungen ausgesetzt, die an verschiedenen Teilen der Maschine durch Krafteinwirkung unterschiedlicher Art entstehen. Aus diesem Grunde ruhen die entsprechenden Maschinenteile auf Lagerungen, welche die Kräfte reduzieren bzw. dämpfen und so dem verstärkten Verschleiß einzelner besonders belasteter Komponenten entgegenwirken. Überdies wird hierdurch eine zumindest teilweise Körperschallentkopplung erreicht, wodurch die Übertragung von Störgeräuschen durch die bewegenden Teile auf die Tragekonstruktion reduziert werden können.

Windkraftanlagen unterliegen naturgemäß zusätzlichen und besonders ausgeprägten Kräften, welche vor allem durch die Rotorbewegung als solche, insbesondere in Form von Unwuchten, als auch durch teilweise extreme Winde, die aus verschiedensten Richtungen auf die Rotorblätter und die Anlage insgesamt einwirken, erzeugt werden.

Der Antriebsstrang bei Windkraftanlagen wird häufig mittels einer Dreipunktlagerung auf dem Maschinenträger gelagert. Die am Rotor entstehenden Kräfte und Momente werden dabei unter anderem von einem Stehlager, welches unmittelbar hinter dem Rotorblatt positioniert ist und die Rotorwelle aufnimmt, auf den Maschinenrahmen übertragen. Die Rotorwelle mündet üblicherweise in einem Getriebe und/oder Generator, welche ebenfalls spezielle Lagerungen aufweisen, die einen weiteren Teil dieser Kräfte und Schwingungen zu kompensieren vermögen. Diese Lager übertragen die vom Getriebe, vom Generator und die im Stehlager auftretenden Schwingungen, insbesondere auch den verursachten Körperschall auf den Maschinenträger und den Turm der Windkraftanlage. Der Turm verstärkt diesen Körperschall und strahlt ihn als störenden Luftschall in die Umgebung ab. Bei Anlagen, die im Meer aufgestellt werden (Off-Shore), überträgt sich der Schall in das Wasser, wo er sich schnell und ohne große Verluste ausbreiten und sich negativ auf die Entwicklung von Meereslebewesen auswirken kann.

Stehlager in Windkraftanlagen bestehen im wesentlichen aus einem Stehlagergehäuse und einem Wälzlager gemäß des Standes der Technik. In der Regel werden aufgrund der hohen radialen und axialen Kräfte und der erforderlichen kardanischen Winkelbewegung des Lagers Pendelrollenlager als Wälzlager eingesetzt. Pendelrollenlager sind kardanisch beweglich, so dass Nick- und Gierbewegungen der Rotorwelle vom Lager aufgenommen werden können. Es hat sich gezeigt, dass diese Stehlager nicht nur, wie erwartet, den Körperschall weiterleiten, sondern aufgrund der auf Windkraftanlagen ausgeübten Kräfte Schäden im Lager selbst entstehen lassen.

Es bestand somit die Aufgabe eine Stehlagerung für Windkraftanlagen oder Anlagen mit vergleichbaren Krafteinwirkungen zur Verfügung zu stellen, welche unter Einwirkung besonderer und komplex angreifender Kräfte verbesserte Eigenschaften in Bezug auf Schwingungsdämpfung, insbesondere Körperschallentkopplung und Materialschonung von Anlagenteilen, insbesondere der Lager selbst, aufweisen.

Gegenstand der Erfindung ist somit ein dämpfungsfähiges Stehlager (4), das im wesentlichen aus einem Stehlager-Formbauteil (4a) und einem Stehlager-Formbauteil (4b), welche zusammen das Lagergehäuse bilden, mit jeweils einer Außen- und einen Innenseite und einer zylindrischen Bohrung zur Aufnahme eines eine Welle (11) führenden Wälzlagers (2) besteht, wobei jede Innenseite eine gemeinsame Passfläche mit der anderen Innenseite des anderen Formteils sowie eine schräge Fläche (7a, 7b) aufweist, so dass bei Zusammenfügung der beiden Bauteile (4a) und (4b) über ihre gemeinsame Passfläche ein zylindrischer Hohlraum entsteht, der eine durch besagte schräge Flächen (7) der Formteile gebildete umlaufende, ringförmige, zumindest teilweise konusförmige Aussparung (6) mit einem nach innen geöffneten durch besagte schräge Flächen definierten Konuswinkel aufweist, wobei die Aussparung ein ringförmiges, umlaufendes ein oder mehrere Teile umfassendes Dämpfungsbauteil (5) passend aufnimmt, das mit dem im zylindrische Hohlraum befindlichen Wälzlager (2) verbunden ist.

Gegenstand ist insbesondere ein entsprechendes Stehlager, bei welchem das ringförmige Dämpfungsbauteil (5) im wesentlichen aus (i) einem ein oder mehrere Teile umfassendes Elastomerlager (1) und (ii) einem ringförmigen, konusförmigen, ein oder mehrere Teile umfassendes Trägerteil (3) besteht, wobei das Trägerteil auf der dem zylindrischen Hohlraum zugewandten Seite mit dem Wälzlager (2) verbunden ist oder dieses fest umschließt, und das Elastomerlager (I) auf der dem Wälzlager (2) gegenüberliegenden Seite des Trägerteils (3) angebracht ist und mit der konusförmigen Aussparung der Formbauteile (4a), (4b) in Kontakt steht

In einer bevorzugten Ausführungsform besteht das Trägerteil (3) aus zwei gleichen von einander getrennten Ringteilen (3a, 3b), die jeweils eine der schrägen Flächen aufweisen, welche den Konuswinkel der Aussparung (6) bilden. Diese Ausführungsform ist besonders dann von Interesse, wenn das Stehlager eine Vorspannung aufweisen soll.

In einer weiteren bevorzugten Ausführungsform besteht das Elastomerlager (1), aus zwei gleichen voneinander getrennten elastomeren Ringteilen (1a), (1b), die in Kontakt zu den jeweiligen schrägen Flächen der konusförmigen Aussparung der Formbauteile (4a), (4b) stehen. Es ist aber erfindungsgemäß auch möglich, den weitgehend gesamten konischen Raum zwischen Bauteilen (4a), (4b) und (3), bzw. (3a), (3b) mit einem einzigen ringförmig umlaufenden Elastomerlager (1) auszustatten, so dass das Trägerteil (3), (3a), (3b), welches mit dem Wälzlager (2) in Verbindung steht, mehr oder weniger vollständig elastomer gelagert ist. Da das Elastomerlager bei Beanspruchung jedoch zusammengedrückt wird, muss in jedem Fall noch Platz für das herausgepresste Elastomervolumen innerhalb des Konusraumes (6) sein.
Gegenstand der Erfindung ist ferner ein entsprechendes Stehlager, bei welchem das Elastomerlager (1), (1a), (1b) fest mit den es begrenzenden Bauteilen (3a), (3b), (4a), (4b) verbunden ist.

Gegenstand der Erfindung ist ferner ein entsprechendes Stehlager, bei welchem das Elastomerlager (1), (1a), (1b) aus mindestens eine elastomere Schicht aufweist. In besonderen Ausführungsformen weist das Elastomerlager (1), (1a), (1b) zwei oder mehr elastomere Schichten auf, die durch Hartschichten voneinander getrennt sind.

Gegenstand der Erfindung ist vorzugsweise ein entsprechendes Stehlager, bei dem das Wälzlager nicht kardanisch beweglich ist. Dies ist möglich, weil das Elastomerlager (1) von sich aus eine kardanische Beweglichkeit besitzt und somit die stets auftretenden Nick- und Gierbewegungen der Rotorwelle aufzunehmen vermag, was ansonsten nur die im Stand der Technik für diese Zwecke eingesetzten aufwendigeren und vor allem Verschleiß anfälligeren Pendelrollenlager zu leisten im Stande sind. Erfindungsgemäß kann das Wälzlager also in einer bevorzugten Ausführungsform starr, bzw. nicht winkeleinstellbar sein und beispielsweise in Form eines Axiallagers, eines Vierpunktlagers oder vorzugsweise eines Kegelrollen- oder Zylinderrollenlagers vorliegen. Ein derartiges erfindungsgemäßes Lager ist auch geeignet, sämtliche von der Windkraftanlage übertragenen Rotorkräfte aufzunehmen (Momentenlager).

Gegenstand der Erfindung ist ferner ein entsprechendes Stehlager, bei welchem zur individuellen Voreinstellung der Dämpfungseigenschaften des Stehlagers die Formbauteile (4a), (4b) und das Trägerteil (3) des Dämpfungsbauteils (5) durch Spannmittel gegeneinander verspannt sind.

Gegenstand der Erfindung ist letztlich die Verwendung eines entsprechendes Stehlagers zur Entkopplung von Schwingungskräften, vorzugsweise Schallschwingungen, welche auf die Rotorwelle von Windkraftanlagen ausgeübt werden.

In folgender Tabelle 1 werden die Bezugszeichen kurz erläutert:

| | |
|---|---|
| (1)(1a)(1b) | Elastomerlager(teile) |
| (2) | Wälzlager (symbolische Darstellung) |
| (3) (3a) (3b) | Trägerteil(e) des Dämpfungsbauteils (5) |
| (4) (4a) (4b) | gesamtes Stehlager und Stehlager-Formbauteile |
| (5) | Dämpfungsbauteil, bestehend aus Hartbauteil(3) und Elastomerbauteil (1) |
| (6) | Konusraum, bzw. konusförmige Aussparung |
| (7) (7a) (7b) | Konusflächen |
| (8) | Rotorblatt |
| (9) | Getriebe |
| (10) | Befestigungsflansch |
| (11) | Rotorwelle |
| 12 | Maschinenträger |

In folgender Tabelle 2 werden die Abbildungen kurz erläutert:

| | |
|---|---|
| Fig. 1: | Anordnung einer Windkraftanlage nach dem Stand der Technik (Schematische Übersicht), (4) gibt die Position des Stehlagers wieder. |
| Fig. 2: | Schnitt durch erfindungsgemäßes Stehlager (3D-Darstellung) |
| Fig. 3: | Schematische Schnitte durch erfindungsgemäßes Stehlager |
| Fig. 4: | 3D-Darstellung des gesamten geschlossenen Stehlagers mit Befestigungsflanschen gemäß der Erfindung |

Im folgenden wird die Erfindung näher beschrieben:

Das erfindungsgemäße Stehlager (4) umfasst zwei Formbauteile (4a, 4b), welche das Lagergehäuse bilden. Gegebenenfalls können sie Befestigungsmittel, wie z.B. Flansche (10), aufweisen, die es ermöglichen, das Stehlager mit den Maschinenträger (12) fest zu verbinden. Letzteres ist kann auch ohne solche Mittel erreicht werden, wenn eines der Formbauteile integraler Bestandteil des Maschinenträgers selbst ist.

Die beiden Formteile (4a), (4b) sind entsprechend so geformt, dass sie das Lagergehäuse bilden können, mit einer zylindrischen Bohrung, vorzugsweise im Durchmesser des zu verwendenden Wälzlagers, welche eine dem Zylinderdurchmesser entsprechende umlaufende ringförmige, zumindest teilweise konusförmige Aussparung (Konusraum) aufweist. Der entstandene Konusraum wird dabei durch schräge Flächen der Formbauteile. (4a), (4b) des Stehlagergehäuses (4) gebildet.
In diesen kanalähnlichen Konusraum, der zum zylindrischen Hohlraum hin offen ist, findet das Dämpfungsteil (5) Platz, und zwar in der Weise, dass das Elastomerlager (1) als ein Bestandteil des Dämpfungsteils die Flächen des ringförmigen Konusraumes weitgehend vollständig oder teilweise ausfüllt, wobei zumindest Platz für verpresstes Elastomermaterial frei bleiben muss.

Das Dämpfungsteil (5) kann gegebenenfalls nur aus dem aus einem oder mehreren Teilen bestehenden Elastomerlager (1) bestehen, vorzugsweise weist es aber zusätzlich ein aus einem oder mehreren Teilen bestehendes festes Trägerteil (3) auf, welches aus harten unflexiblen Materialen, vorzugsweise Metall, Hartkunststoffen oder karbonfaserhaltigen Stoffen geformt ist und somit besonders geeignet ist, das im zylindrischen Hohlraum befindliche und längs zu diesem ausgerichtete Wälzlager (2) zu tragen oder zu umschließen, mit welchem es fest verbunden ist.

Das feste Trägerteil (3) besteht vorzugsweise aus zwei gleichartig geformten Ringelementen (3a), (3b), die jeder im Prinzip einen Querschnitt in Form eines rechtwinkligen Dreiecks oder eines Teils hiervon aufweisen, so dass sie in die konusförmige Aussparung (6) passend eingelegt werden können, wobei der rechte Winkel jedes Elementes (3a), (3b) in vertikaler Richtung etwa entlang der Scheitellinie des Konus der umlaufenden Aussparung und in horizontaler Richtung etwa entlang Innenfläche des zylindrischen Hohlraums des Stehlagers verläuft.
Die beiden Trägerteile(3a,3b) liegen sich somit entlang der Konusscheitellinie unmittelbar gegenüber ohne fest miteinander verbunden zu sein. Hierdurch vermögen sie, sich auf unterschiedliche Spannungen bzw. Kräfte unterschiedlich einzustellen, bzw. zu positionieren. Dies ist insbesondere dann von Bedeutung, wenn das Stehlager in seiner bevorzugten Ausführungsform Befestigungsmittel, vorzugsweise Spannschrauben, aufweist, welche eine Verspannung der Gehäuseteile (4a, 4b) mit dem Dämpfungselement (5) oder vorzugsweise den Trägerelementen (3a, 3b) ermöglichen.

Das Elastomerlager (1) kann ein einziges Werkstück sein, welches in die Konusflächen der Aussparung (6) eingelegt und mit diesen vorzugsweise durch Kleben oder Vulkanisieren fest verbunden wird. Vorzugsweise besteht es aber aus zwei elastomeren umlaufenden Schichten (1a), (1b), die getrennt auf den entsprechenden schrägen Flächen (7a, 7b) wie beschrieben, befestigt sind. Um Material einzusparen, können die umlaufenden Elastomerschichten auch unterbrochen sein.

Die erfindungsgemäß zum Einsatz kommenden Elastomerlager (1,1a,1b) sind an sich bekannt und bestehen im wesentlichen aus einer oder mehreren Elastomerschichten , welche, im falle von mehreren Schichten, durch unelastische, nicht elastomere, feste, bzw. harte Zwischenschichten voneinander getrennt sind. Die erfindungsgemäß verwendeten Elastomermaterialien bestehen im wesentlichen aus einem Naturkautschuk, einem Naturkautschukderivat oder aus einem geeigneten elastischen polymeren Kunststoff oder Kunststoffgemisch. Die Elastomerschicht kann erfindungsgemäß unterschiedliche Härte ("Shore-Härte") und unterschiedliche Dämpfungseigenschaften aufweisen, entsprechend den gewünschten Anforderungen. Vorzugsweise werden Elastomere mit einer Härte von 20 bis 100 Shore A, insbesondere 30 bis 80 Shore A verwendet. Die Herstellung derartiger Elastomere unterschiedlicher Härte ist im Stand der Technik bekannt und in der einschlägigen Literatur hinreichend beschrieben. Vorzugsweise werden handelsübliche Naturkautschuke oder Kunststoffe eingesetzt.

Die nicht elastomeren Zwischenschichten sind erfindungsgemäß aus weitestgehend unelastischen Werkstoffen mit geringer Kompressibilität gefertigt. Vorzugsweise sind dies Metallbleche, aber auch andere Materialien, wie harte Kunststoffe, Verbundwerkstoffe oder karbonfaserhaltige Werkstoffe sind einsetzbar. Die Zwischenbleche und die Elastomermaterialien werden in der Regel durch Vulkanisierung miteinander verbunden.

Erfindungsgemäß bestehen die Elastomerlager (1, 1a, 1b) aus ein bis acht, vorzugsweise ein bis drei elastomeren Schichten und werden in flacher Ausführung verwendet. Es ist aber auch erfindungsgemäß möglich, konkav oder konvex gekrümmte Elastomerlager einzusetzen, welche den Vorteil haben, dass sie weniger verschleißanfällig sind. In diesen Fällen ist es erforderlich, auch die Konusflächen der Bauteile (3a,3b) und (4a,4b) in der entsprechenden passenden Form auszubilden.
Die Dämpfung bzw. Schwingungsentkopplung erfolgt erfindungsgemäß dadurch, dass die im Wälzlager (2) auftretenden, durch die drehende Welle bedingten Schwingungskräfte direkt oder vorzugsweise über das feste Trägerteil (3) auf das eigentliche Elastomerlager (1) weitergeleitet und somit gedämpft werden. Durch die gewählten konstruktiven Merkmale, können so hervorragend Ergebnisse insbesondere bei der Schallentkopplung bei Windkraftanlagen erzielt werden.

Die erfindungsgemäße Lagerung weist zusammengefasst folgende Vorteile auf:
- gute Geräuschreduzierung (Schallentkopplung)
- generelle Dämpfung anderweitiger im System auftretender Schwingungen
- Winkeleinstellbarkeit kann durch Einstellbarkeit der Dämpfungseinheit (5) des Elastomerlagers erreicht werden und nicht durch das Wälzlager selbst
- Möglichkeit das Lagergehäuse im Maschinenträger zu integrieren.

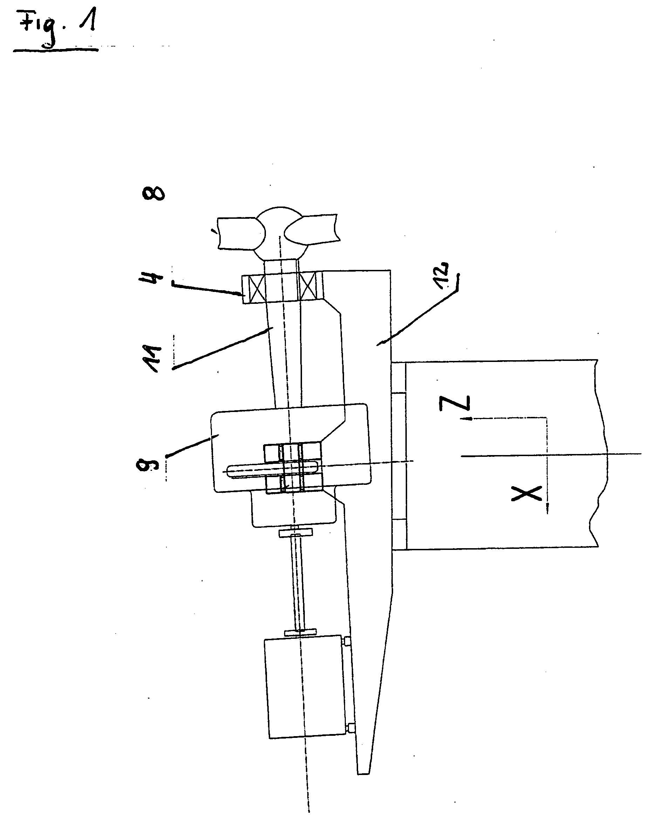

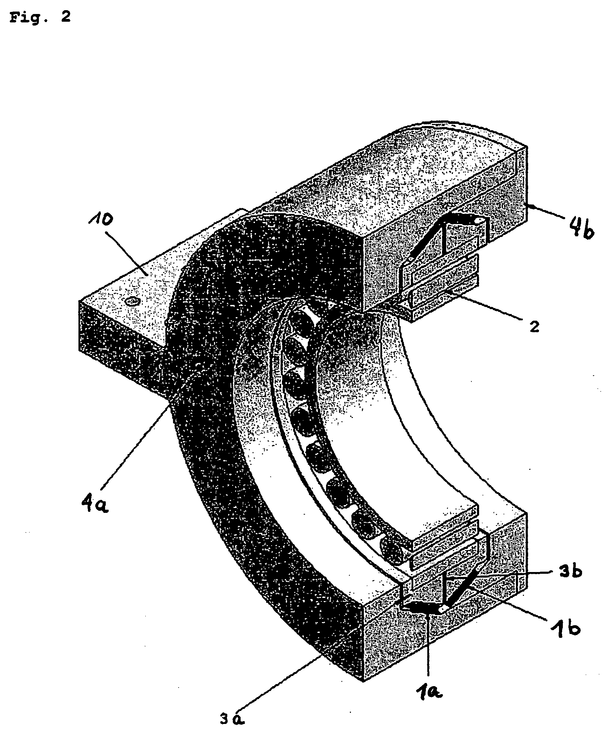

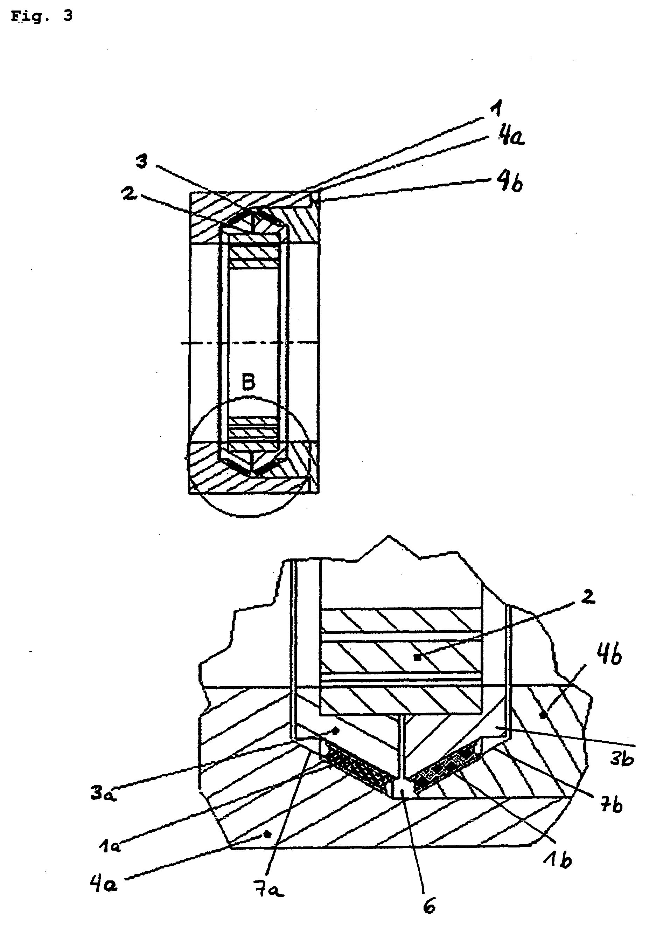

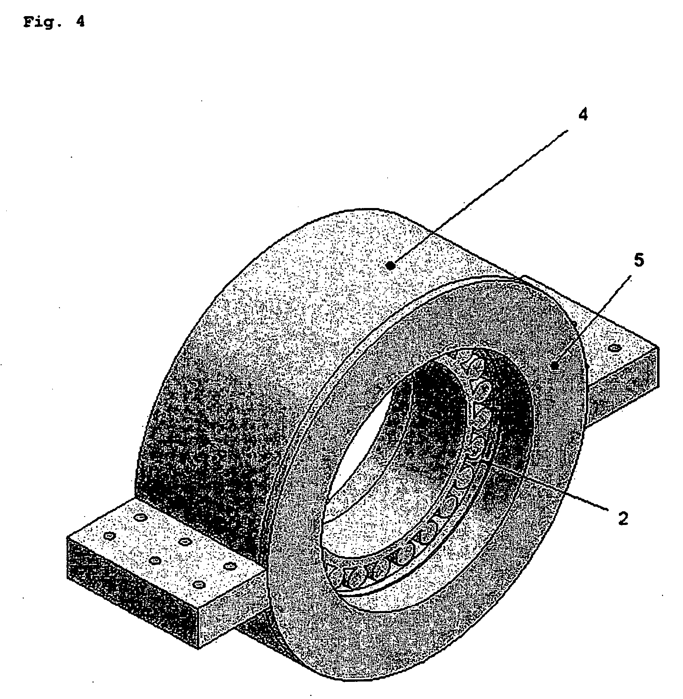

## Patentansprüche

1. Dämpfungsfähiges Stehlager (4) einer Rotorwelle einer Windkraftanlage umfassend ein Dämpfungsbauteil und ein Wälzlager, **dadurch gekennzeichnet dass** es ein Stehlager-Formbauteil (4a) und einem Stehlager-Formbauteil (4b) aufweist, welche zusammen das Lagergehäuse bilden, mit jeweils einer Außen- und einen Innenseite und einer zylindrischen Bohrung zur Aufnahme des eine Welle (11) führenden Wälzlagers (2), wobei jede Innenseite eine gemeinsame Passfläche mit der anderen Innenseite des anderen Formteils sowie eine schräge Fläche (7a,7b) aufweist, so dass bei Zusammenfügung der beiden Bauteile (4a) und (4b) über ihre gemeinsame Passfläche ein zylindrischer Hohlraum entsteht, der eine durch besagte schräge Flächen (7a,7b) der Formteile gebildete umlaufende, ringförmige, zumindest teilweise konusförmige Aussparung (6) mit einem nach innen geöffneten durch besagte schräge Flächen (7a, 7b) definierten Konuswinkel aufweist, wobei die Aussparung das ringförmige, umlaufende ein oder mehrere Teile umfassende Dämpfungsbauteil (5) passend aufnimmt, das mit dem im zylindrischen Hohlraum befindlichen Wälzlager (2) verbunden ist, wobei das ringförmige Dämpfungsbauteil (5) im Wesentlichen aus (i) einem ein oder mehrere Teile umfassendes Elastomerlager (1) und (ii) einem ringförmigen, konusförmigen, Trägerteil (3) besteht, welches aus zwei gleichen voneinander getrennten Ringteilen (3a, 3b) besteht, die jeweils eine schräge Fläche aufweisen, welche den schrägen Flächen (7a, 7b) der Aussparung (6) gegenüberstehen, wobei das Trägerteil auf der dem zylindrischen Hohlraum zugewandten Seite mit dem Wälzlager (2) verbunden ist oder dieses fest umschließt, und das Elastomerlager (1) auf der dem Wälzlager (2) gegenüberliegenden Seite des Trägerteils (3) angebracht ist und mit der konusförmigen Aussparung der Formbauteile (4a), (4b) in Kontakt steht.

2. Stehlager nach Anspruch 1, **dadurch gekennzeichnet, dass** die Ringteile (3a)(3b) sich entlang der Konusscheitellinie gegenüber liegen.

3. Stehlager nach Anspruch 1 oder 2, **dadurch gekennzeichnet, dass** das Elastomerlager (1), aus zwei gleichen voneinander getrennten elastomeren Ringteilen (1a), (1 b) besteht, die in Kontakt zu den jeweiligen schrägen Flächen der konusförmigen Aussparung der Formbauteile (4a), (4b) stehen.

4. Stehlager einem der Ansprüche 1 - 3, **dadurch gekennzeichnet, dass** das Elastomerlager (1), (1a), (1b) fest mit den es begrenzenden Bauteilen (3a), (3b), (4a), (4b) verbunden ist.

5. Stehlager nach einem der Ansprüche 1 - 4, **dadurch gekennzeichnet dass** das Elastomerlager (1), (1 a), (1 b) mindestens eine elastomere Schicht aufweist.

6. Stehlager nach Anspruch 5, **dadurch gekennzeichnet, dass** Elastomerlager (1), (1 a), (1 b) zwei oder mehr ealstomere Schichten aufweist, die durch Hartschichten voneinander getrennt sind.

7. Stehlager nach einem der Ansprüche 1 - 6, **dadurch gekennzeichnet dass** Elastomerlager (1), (1 a), (1 b) flach ist oder konkav oder konvex gekrümmt ist, und die Konusflächen der Bauteile (3a,3b) und (4a,4b) die entsprechend passende Form besitzen.

8. Stehlager nach einem der Ansprüche 1 - 7, **dadurch gekennzeichnet, dass** das Wälzlager (2) ein Axiallager, ein Vierpunktlager, ein Kegelrollenlager oder ein Zylinderrollenlager ist oder dass das Wälzlager nicht winkeleinstellbar ist.

9. Stehlager nach einem der Ansprüche 1 - 8, **dadurch gekennzeichnet, dass** zur individuellen Voreinstellung der Dämpfungseigenschaften des Stehlagers die Formbauteile (4a), (4b) und das Trägerteil (3) des Dämpfungsbauteils (5) durch Spannmittel gegeneinander verspannt sind.

10. Verwendung eines Stehlagers nach einem oder mehreren der Ansprüche 1 - 9 zur Entkopplung von Schwingungskräften inklusive Schall, welche auf die Rotorwelle von Windkraftanlagen ausgeübt werden.

## Claims

1. Damping-capable pedestal bearing (4) of a rotor shaft of a wind turbine, comprising a damping component and a roller bearing, **characterised in that** it has a pedestal bearing shaped component (4a) and a pedestal bearing shaped component (4b) which together form the bearing casing, each with an outside and an inside and a cylindrical hole for accommodation of the roller bearing (2) carrying a shaft (11), where each inside has a common mating surface with the other inside of the other shaped part and an inclined surface (7a, 7b), so that, when the two components (4a) and (4b) are joined together via their common mating surface, a cylindrical cavity is formed which has a circumferential, annular, at least partly conical cut-out (6) which is formed by said inclined surfaces (7a,7b) of the shaped parts and has a cone angle, open to the inside, which is formed by said inclined surfaces (7a, 7b), where the cut-out accommodates the annular, circumferential damping component (5), which comprises one or more parts and is connected to the roller bearing (2) located in the cylindrical cavity, with a close fit, where the annular damping component (5) essentially consists of (i) an elastomer bearing (1) comprising one or more parts and (ii) an annular, conical support part (3), which consists of two identical ring parts (3a, 3b), which are separated from one another and each have an inclined surface opposite the inclined surfaces (7a, 7b) of the cut-out (6), where the support part is connected to or firmly surrounds the roller bearing (2) on the side facing the cylindrical cavity, and the elastomer bearing (1) is mounted on the side of the support part (3) opposite the roller bearing (2) and is in contact with the conical cut-out of the shaped components (4a), (4b).

2. Pedestal bearing according to Claim 1, **characterised in that** the ring parts (3a) (3b) are located opposite along the cone apex line.

3. Pedestal bearing according to Claim 1 or 2, **characterised in that** the elastomer bearing (1) consists of two identical elastomeric ring parts (1a), (1b), which are separated from one another and are in contact with the respective inclined surfaces of the conical cut-out of the shaped components (4a), (4b).

4. Pedestal bearing according to one of Claims 1 - 3, **characterised in that** the elastomer bearing (1), (1a), (1b) is firmly connected to the components (3a), (3b), (4a), (4b) delimiting it.

5. Pedestal bearing according to one of Claims 1 - 4, **characterised in that** the elastomer bearing (1), (1a), (1b) has at least one elastomeric layer.

6. Pedestal bearing according to Claim 5, **characterised in that** elastomer bearing (1), (1a), (1 b) has two or more elastomeric layers, which are separated from one another by hard layers.

7. Pedestal bearing according to one of Claims 1 - 6, **characterised in that** elastomer bearing (1), (1 a), (1 b) is flat or curved in a concave or convex manner, and the cone surfaces of components (3a, 3b) and (4a, 4b) have the correspondingly fitting shape.

8. Pedestal bearing according to one of Claims 1 - 7, **characterised in that** the roller bearing (2) is an axial bearing, a four-point bearing, a tapered roller bearing or a cylindrical roller bearing or **in that** the roller bearing is not angle-adjustable.

9. Pedestal bearing according to one of Claims 1 - 8, **characterised in that**, for individual pre-adjustment of the damping properties of the pedestal bearing, the shaped components (4a), (4b) and the support part (3) of the damping component (5) are tensioned against one another by tensioning means.

10. Use of a pedestal bearing according to one or more of Claims 1 - 9 for decoupling vibration forces, including sound, exerted on the rotor shaft of wind turbines.

## Revendications

1. Chaise-palier susceptible d'exercer un effet d'amortissement (4) d'un arbre de rotor d'une éolienne, comprenant un composant d'amortissement et un palier à rouleaux, **caractérisée en ce qu'**elle comporte un composant en forme de chaise-palier (4a) et un composant en forme de chaise-palier (4b) qui forment ensemble le carter de palier, chacun avec un extérieur et un intérieur et un trou cylindrique pour loger le palier à rouleaux (2) porteur d'un arbre (11), où chaque intérieur comporte une surface de conjugaison commune avec l'autre intérieur de l'autre partie formée et une surface inclinée (7a, 7b), de telle sorte que, lorsque les deux composants (4a) et (4b) sont joints ensemble via leur surface de conjugaison commune, une cavité cylindrique soit formée, laquelle comporte une découpe annulaire circonférentielle, au moins partiellement conique (6) qui est formée par lesdites surfaces inclinées (7a,7b) des parties formées et présente un angle de cône, ouvert sur l'intérieur, qui est formé par lesdites surfaces inclinées (7a, 7b), où la découpe loge le composant d'amortissement circonférentiel annulaire (5), lequel comprend une ou plusieurs partie(s) et est connecté au palier à rouleaux (2) placé dans la cavité cylindrique, selon un ajustement serré, où le composant d'amortissement annulaire (5) est constitué de façon essentielle par (i) un palier en élastomère (1) comprenant une ou plusieurs partie(s) et par (ii) une partie de support conique annulaire (3), laquelle est constituée par deux parties de bague identiques (3a, 3b), qui sont séparées l'une de l'autre et dont chacune comporte une surface inclinée opposée aux surfaces inclinées (7a, 7b) de la découpe (6), où la partie de support est connectée au palier à rouleaux (2) ou entoure fermement celui-ci sur le côté faisant face à la cavité cylindrique, et le palier en élastomère (1) est monté sur le côté de la partie de support (3) opposé au palier à rouleaux (2) et est en contact avec la découpe conique des composants formés (4a), (4b).

2. Chaise-palier selon la revendication 1, **caractérisée en ce que** les parties de bague (3a) (3b) sont placées de façon opposée suivant la ligne d'apex du cône.

3. Chaise-palier selon la revendication 1 ou 2, **caractérisée en ce que** le palier en élastomère (1) est constitué par deux parties de bague élastomériques identiques (1 a), (1 b), qui sont séparées l'une de l'autre et qui sont en contact avec les surfaces inclinées respectives de la découpe conique des composants formés (4a), (4b).

4. Chaise-palier selon l'une des revendications 1 - 3, **caractérisée en ce que** le palier en élastomère (1), (1 a), (1 b) est fermement connecté aux composants (3a), (3b), (4a), (4b) le délimitant.

5. Chaise-palier selon l'une des revendications 1 - 4, **caractérisée en ce que** le palier en élastomère (1), (1a), (1b) comporte au moins une couche élastomérique.

6. Chaise-palier selon la revendication 5, **caractérisée en ce que** le palier en élastomère (1), (1 a), (1 b) comporte deux couches élastomériques ou plus, lesquelles sont séparées l'une de l'autre ou les unes des autres par des couches dures.

7. Chaise-palier selon l'une des revendications 1 - 6, **caractérisée en ce que** le palier en élastomère (1), (1 a), (1 b) est plat ou incurvé d'une manière concave ou convexe, et les surfaces de cône des composants (3a, 3b) et (4a, 4b) présentent la forme d'ajustement correspondante.

8. Chaise-palier selon l'une des revendications 1 - 7, **caractérisée en ce que** le palier à rouleaux (2) est un palier axial, un palier à quatre points, un palier à rouleaux coniques ou un palier à rouleaux cylindriques ou **en ce que** le palier à rouleaux n'est pas réglable angulairement.

9. Chaise-palier selon l'une des revendications 1 - 8, **caractérisée en ce que**, pour le pré-réglage individuel des propriétés d'amortissement de la chaise-palier, les composants formés (4a), (4b) et la partie de support (3) du composant d'amortissement (5) sont mis sous tension les uns à l'encontre des autres par un moyen de mise sous tension.

10. Utilisation d'une chaise-palier selon une ou plusieurs des revendications 1 - 9 pour découpler des forces de vibration, y compris un son, exercées sur l'arbre de rotor d'éoliennes.
